# FASCICULE DE BREVET EUROPEEN

(11) **EP 0 676 145 B1**
(45) Date de publication et mention de la délivrance du brevet: **01.09.1999**
(21) Numéro de dépôt: 94105366.2
(22) Date de dépôt: 07.04.1994
(51) Int. Cl.: A23F 5/16

(54) **Hydrolyse de café avec une bêta-mannanase immobilisée**
Hydrolyse von Kaffee mit immobilisierter Beta-Mannanase
Coffee hydrolysis with immobilised beta-mannanase

(43) Date de publication de la demande: 11.10.1995
(73) Titulaire: SOCIETE DES PRODUITS NESTLE S.A., 1800 Vevey (CH)
(72) Inventeur: Nicolas, Pierre, 1806 Saint-Legier (CH); Raetz, Eric, CH-1018 Lausanne (CH); Reymond, Sylviane, CH-1066 Epalinges (CH); Sauvageat, Jean-Luc, CH-1018 Lausanne (CH)
(74) Mandataire: Vuille, Roman

(56) Documents cités:
- DE-A- 2 063 489
- FR-A- 2 231 319
- US-A- 2 801 920
- CHEMICAL ABSTRACTS, vol. 88, no. 7, 1978, Columbus, Ohio, US; abstract no. 48996, J. PULS ET AL. 'Hydrolysis of hemicelluloses by immobilised enzymes'
- DATABASE WPI 27 Juillet 1993 Derwent Publications Ltd., London, GB; AN 93-360092 & BR-A-9 200 186 (EMBRABA EMPRESA BRASIL PESQUISA)
- DATABASE WPI 23 Novembre 1983 Derwent Publications Ltd., London, GB; AN 84-187394 & SU-A-1 055 770 (BALTSERE D YU)

## Description

La présente invention a pour objet un procédé d'hydrolyse des galactomannanes présents dans un extrait liquide de café.

US 2802920 divulgue l'hydrolyse de galactomannanes présents dans un extrait de café avec une préparation de bêta-mannanases dans le but d'empêcher la formation d'un gel lors de la congélation de cet extrait.

Le brevet FR 223139 décrit un procédé de préparation de café instantané dans lequel le café en solution aqueuse est traité avec une peroxydase en présence d'un peroxyde.

Le document "Chemical Abstracts Vol.88 N° 48996" divulgue l'immobilisation d'hemicellulases ou de mannanases sur un substrat poreux pour hydrolyser des xylanes ou des mannanes de bois, en continu.

Food Review, 8/9, 37-39 (1984) décrit l'utilisation industrielle de bêta-mannanases pour diminuer la viscosité d'un extrait liquide de café, ce qui permet de le concentrer jusqu'à des teneurs élevées en matière sèche.

Cependant, cette utilisation industrielle de bêta-mannanases présente certains inconvénients. En effet, on gaspille cette enzyme en ne l'utilisant qu'une fois, par exemple. D'autre part, la présence d'enzyme dans le produit final est indésirable.

La présente invention a pour but de pallier aux inconvénients de l'art antérieur.

Elle a plus particulièrement pour objet un procédé d'hydrolyse des galactomannanes d'un extrait liquide de café dans lequel on traite ledit extrait à une température de 20-80°C avec des bêta-mannanases immobilisées par liaison covalente sur un support ou par polymérisation des mannanases adsorbées sur un support.

L'invention présente ainsi l'avantage que l'on réalise une économie d'enzyme.

Un autre avantage réside dans le fait que l'on n'observe pas de relarguage de la bêta-mannanase du support.

Un autre avantage réside dans le fait que l'on peut travailler à une température telle que l'on n'observe pas de contamination bactérienne.

Un avantage surprenant de la présente invention réside dans le fait que les bêta-mannanases ne perdent pas leur activité suite à leur liaison covalente sur un support ou suite à la polymérisation des molécules adsorbées sur un support. De même, l'activité enzymatique de la bêta-mannanase immobilisée est relativement constante au cours du temps.

Enfin, la présente invention présente encore l'avantage que l'on peut hydrolyser l'extrait de café dans un réacteur de type cuve agitée, et dans un réacteur comprenant un lit fixe ou un lit fluidisé de bêta-mannanases immobilisées, et cela malgré la viscosité de l'extrait de café.

Dans la suite de la description, on entend par "réacteur de type cuve agitée" un système agité mécaniquement comprenant en suspension des bêta-mannanases immobilisées.

De même, on entend par "un lit fixe de bêta-mannanases immobilisées" des bêta-mannanases immobilisées sur ou dans un support qui est compacté dans un réacteur destiné au traitement en continu d'un extrait liquide de café.

On entend également par "un lit fluidisé de bêta-mannanases immobilisées" des bêta-mannanases immobilisées sur un support, qui est placé mais non compacté dans un réacteur destiné au traitement en continu d'un extrait liquide de café. Le flux d'extrait de café, circulant de bas en haut, met alors les particules de support en suspension. Ce type de réacteur connu sous le nom de "réacteur à lit fluidisé" est particulièrement avantageux pour le traitement de milieux comprenant des matières solides en suspension.

En outre, on entend respectivement par "mannobiose" et "mannotriose" un dimère ou un trimère de mannose, et par "mannosaccharide" un polymère d'au moins deux mannoses.

Enfin, on définit l'unité de bêta-mannanase comme étant la quantité de bêta-mannanase qui libère, à partir de gomme de caroube, une quantité de sucres réducteurs équivalente à 1 micromole de mannose par minute, à pH5 et à 30°C.

Pour réaliser l'invention, la bêta-mannanase est immobilisée par liaison covalente à la surface d'un support traditionnel, ou par polymérisation de la bêta-mannanase adsorbée préalablement à la surface d'un support traditionnel, par exemple.

On peut alors hydrolyser l'extrait liquide de café à une température de 40-70°C avec ces enzymes immobilisées, par exemple.

De préférence, on utilise pour cela une bêta-mannanase bactérienne ou fongique, en particulier la bêta-mannanase extraite d'*Aspergillus niger*, notamment la bêta-mannanase purifiée d'*Aspergillus niger* commercialisée sous la marque Gamanase® (NOVO-NORDISK, Danemark), par exemple.

Par ailleurs, l'extrait liquide de café peut être obtenu par la percolation d'un liquide d'extraction à travers des cellules remplies de café torréfié moulu. Cette extraction peut être réalisée à contre courant, c'est à dire que de l'eau, sous pression à une température pouvant être comprise entre 150 et 180°C, est introduite dans la cellule contenant la charge de café torréfié moulu qui a été la plus épuisée en ayant subi N extractions, à la base de celle-ci. L'extrait liquide de cette cellule d'extraction est ensuite amené à traverser la cellule d'extraction contenant la charge de café ayant servi (N-1) fois, cela ainsi de suite jusqu'à ce que l'extrait liquide traverse la cellule qui vient d'être remplie de café torréfié moulu frais. L'extrait final que l'on utilise sort de la dernière cellule à une température de l'ordre de 100°C. On peut distinguer ainsi un étage sous pression, constitué des cellules qui contiennent le café le plus épuisé, d'un étage atmosphérique, constitué des cellules qui contiennent le café le moins épuisé.

L'extrait liquide de café peut être également obtenu par percolation d'un liquide d'extraction à travers des cellules remplie de café torréfié moulu d'un étage sous pression. Dans ce procédé connu sous le nom de "split extraction" et qui sera appelé dans la suite de la description "extraction séparée", deux liquides d'extraction sont utilisés, les cellules d'extraction étant divisées en un étage sous pression et un étage atmosphérique, chaque étage étant extrait avec son propre liquide d'extraction. Le café contenu dans l'étage atmosphérique est extrait avec un premier liquide d'extraction sous des conditions de température et de pression modérées, alors que le café contenu dans l'étage sous pression est extrait avec un deuxième liquide d'extraction à des conditions de températures et de pression beaucoup plus élevées. Il est ainsi produit deux extraits liquides différents qui, après évaporation partielle de l'extrait issu de l'étage sous pression, par exemple, peuvent être combinés l'un à l'autre et sont ensuite selon des procédés classiques transformés en poudre.

Dans la présente invention, on peut donc utiliser, en particulier, l'extrait de l'étage sous pression résultant d'une extraction séparée de café torréfié moulu, avant que celui-ci ne soit évaporé partiellement.

On utilise ainsi, de préférence, l'extrait de l'étage sous pression décrit dans EP 0538512, par exemple.

Selon la présente invention, le support peut être également un support poreux, présentant notamment des pores ayant une taille de 20-200 nm, par exemple.

En particulier, le support poreux peut être choisi dans le groupe formé de particules de silice, de verre, d'un polymère acrylique, notamment le polymère acrylique Eupergit-C® (Röhm, Allemagne), et d'un polymère phénolique, notamment une résine phénol-formaldéhyde Duolite® (Supelco, USA), en particulier la résine Duolite® S-761, par exemple.

De préférence, on immobilise la bêta-mannanase par liaison covalente à la surface du polymère acrylique Eupergit-C®. Ce dernier présente des groupements oxirane dont le cycle epoxyde permet de fixer les bêta-mannanases. On peut ainsi immobiliser au moins 1900 unités de bêta-mannanases par g d'Eupergit-C®, par exemple.

De préférence, on immobilise les bêta-mannanases par polymérisation des bêta-mannanases adsorbées à la surface de particules d'une résine phénolique Duolite®. On peut, par exemple, utiliser comme agent de polymérisation du glutaraldéhyde.

Dans un premier mode préféré de la présente invention, on hydrolyse l'extrait de café dans un réacteur de type cuve agitée, avec une bêta-mannanase immobilisée soit par liaison covalente sur un support, soit par polymérisation des mannanases adsorbées sur un support. Le système peut être automatisé et fonctionner en mode semi-continu avec les trois phases suivantes. Premièrement, on remplit la cuve avec l'extrait de café à traiter, puis on hydrolyse sous agitation mécanique, enfin on vidange la cuve après une durée déterminée. La rétention de l'enzyme dans le réacteur peut se faire au moyen d'un filtre placé dans la partie inférieure de la cuve. Ce filtre peut retenir toutes les particules de diamètre supérieur à 40 µm, par exemple.

Selon ce mode d'hydrolyse, on peut observer que les bêta-mannanases immobilisées par liaison covalente sur un support présentent une bonne stabilité, car elles peuvent conserver plus de 60% de leur activité enzymatique après au moins 500 cycles successifs d'hydrolyse d'extraits de café, par exemple.

Dans un deuxième mode de réalisation préféré de la présente l'invention, on hydrolyse en continu l'extrait de café liquide dans un réacteur comprenant un lit fixe de bêta-mannanases immobilisées soit par liaison covalente sur un support, soit par polymérisation des bêta-mannanase adsorbées sur un support. Ainsi utilisées, les bêta-mannanases immobilisées conservent une bonne stabilité, car elles peuvent conserver plus de 80% de leur activité enzymatique après plus de 20 heures d'hydrolyse en continu, par exemple.

Dans un troisième mode de réalisation préféré de la présente invention, on hydrolyse en continu l'extrait de café liquide dans un réacteur comprenant un lit fluidisé de bêta-mannanases immobilisées par liaison covalente sur un support.

Les exemples ci-après sont donnés à titre d'illustration du procédé selon la présente invention. Dans ces exemples, on a utilisé la bêta-mannanase commercialisée sous la marque Gamanase® qui présente une activité spécifique de 65000 unités par g de protéines, et dans certains de ces exemples on a utilisé comme substrat modèle un mélange à 2% de café soluble dans de l'eau distillée ou une solution de galactomannanes préparée à partir de gomme de caroube, qui illustrent très bien les résultats que l'on pourrait obtenir avec un extrait de café.

Ces exemples sont précédés d'une analyse des extraits par chromatographie, et d'une présentation des dessins.

### Chromatographie HPTLC

On détermine qualitativement et quantitativement par chromatographie les oligosaccharides présents dans un extrait de café liquide, sans devoir réaliser une purification préliminaire de cet extrait. On peut ainsi utiliser cette méthode dans différents tests, tels que la cinétique enzymatique d'hydrolyse des galactomannanes, et la mesure de l'activité enzymatique résiduelle des extraits de café hydrolysés, par exemple.

Pour cela, on utilise les plaques en silice pour chromatographie HPTLC "silica gel 60" (Merck 5631/5641). On dépose l'équivalent de 80 µg d'extrait de café sec, et on effectue trois développements successifs avec un solvant composé de chloroforme, d'acide acétique et d'eau dans une proportion de 30/35/11. On révèle la plaque à 110°C pendant 30 min avec un réactif comprenant 4 ml d'aniline, 4 gr de diphénylamine, 200 ml d'acétone, et 30 ml d'acide phosphorique 85%.

On peut alors déterminer qualitativement quels sont les oligosaccharides présents dans l'extrait, par exemple le mannose libre, le mannobiose, le mannotriose et les autres mannosaccharides ayant des degrés de polymérisation inférieurs à 8.

On peut également déterminer la teneur des différents oligosaccharides dans l'extrait, en faisant la relation entre la densité d'une tache sur la plaque correspondant à un oligosaccharide de l'extrait et celle correspondant à cet oligosaccharide déposé sur la plaque à une concentration connue. On considère aussi que l'on atteint 100% d'hydrolyse des galactomannanes lorsqu'il ne subsiste plus que le mannobiose et le mannotriose, qui sont des produits de fin de réaction que l'enzyme n'est plus capable de scinder.

### Dessins

Figure 1 (a et b) : hydrolyse de galactomannanes dans un réacteur à lit fixe contenant une bêta-mannanase immobilisée sur de la Duolite® S-761. Représentation du pourcentage d'hydrolyse en fonction du temps de résidence (1a), et de l'activité relative de l'enzyme en fonction du temps (1b).
Figure 2 (a et b) : hydrolyse de galactomannanes dans un réacteur à lit fixe contenant une bêta-mannanase immobilisée sur des billes de silice. Représentation du pourcentage d'hydrolyse en fonction du temps de résidence (2a), et de l'activité relative de l'enzyme en fonction du temps (2b).
Figure 3 (a et b) : hydrolyse de galactomannanes dans un réacteur à lit fixe contenant une bêta-mannanase immobilisée sur de l'Eupergit-C®. Représentation du pourcentage d'hydrolyse en fonction du temps de résidence (3a), et de l'activité relative de l'enzyme en fonction du temps (3b).
Figure 4: hydrolyse d'un extrait de café en lit fluidisé par une bêta-mannanase immobilisée sur de L'Eupergit-C®. Représentation du pourcentage d'hydrolyse en fonction du temps de résidence normalisé.
Figure 5: hydrolyse d'un extrait de café en cuve agitée par une bêta-mannanase immobilisée sur de l'Eupergit-C®. Représentation du pourcentage de mannosaccharide produit en fonction du nombre de cycles d'hydrolyse.

### Exemple 1

On immobilise la bêta-mannanase par adsorption et polymérisation dans un polymère phénolique, de la manière suivante.

On utilise la résine Duolite® S-761 (Supelco, USA) présentant des pores d'une taille d'environ 60 nm. On tamise cette résine pour obtenir des particules de 0,2-0,4 millimètres, on la traite par du NaOH 0,5 N, pendant 1 heure, on la lave ensuite avec de l'eau, puis on la traite pendant 30 min avec du HCl 0,25 N, et finalement on la lave avec de l'eau distillée jusqu'à un pH de 4. On ajoute à 5 g de résine traitée, 25 ml d'une solution composée de 5 ml de Gamanase® et 20 ml de tampon 0,1 M phosphate de sodium pH 6, et on laisse la Gamanase® s'adsorber sur la résine pendant 12 heures à 22°C, avec une agitation douce. On lave ensuite la préparation avec de l'eau distillée, puis on polymérise les enzymes adsorbées par une solution de 2,5% de glutaraldéhyde pendant 3 heures à 22°C, enfin on lave la préparation à l'eau distillée.

On prépare également une solution de galactomannanes en chauffant, à 80°C, 3 g de gomme de caroube dans 1 litre de tampon 0,1 M acétate pH5, et on utilise la partie soluble pour les essais suivants.

On teste ainsi l'enzyme immobilisée dans un réacteur traditionnel à lit fixe. Ce réacteur comprend un corps tubulaire en verre, et deux filtres de nylon (70 µm) qui maintiennent une surface horizontale à chaque extrémité du corps. Le réacteur est immergé dans un bain d'eau à 30°C, et la solution de galactomannanes est pompée par une pompe péristaltique classique, puis est chauffée à 30°C avant de passer à travers le réacteur.

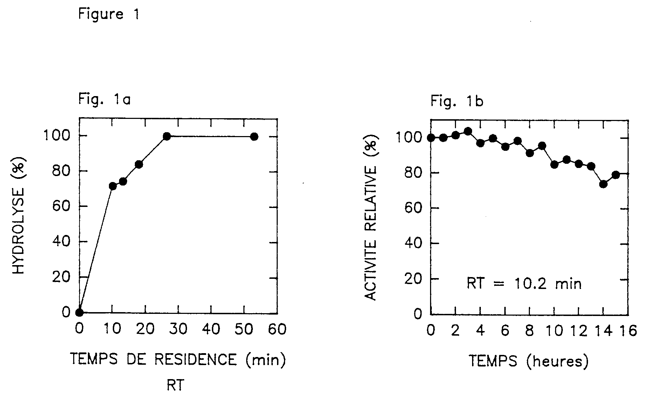

Dans un premier temps, on pompe la solution de galactomannanes à différentes vitesses dans le réacteur. On mesure alors par une méthode traditionnelle la quantité de sucres réducteurs apparaissant dans l'éluat en fonction du temps de résidence (RT) de l'extrait dans le réacteur. On détermine alors le pourcentage d'hydrolyse des galactomannanes en fonction du temps de résidence de l'extrait dans le réacteur. On considère que l'on atteint un taux d'hydrolyse de 100% quant la quantité de sucres réducteurs produits est égale à celle obtenue, dans un essai séparé, par hydrolyse totale du substrat avec de la Gamanase® non immobilisée. Les résultats sont indiqués dans la figure 1a.

Dans un deuxième temps, on fait passer en continu la solution de galactomannanes dans le réacteur. On choisit pour cela un temps de résidence (RT) qui donne au début de l'expérience un taux d'hydrolyse inférieur à 100%. On mesure alors régulièrement la quantité de sucres réducteurs apparaissant dans l'éluat. On peut alors observer que cette quantité diminue en fonction du temps, probablement à cause d'une perte d'activité de l'enzyme. C'est pourquoi, on détermine l'activité relative (%) de l'enzyme en fonction du temps, en faisant le rapport entre la quantité de sucres réducteurs obtenue et celle que l'on avait au début de l'essai. Les résultats sont indiqués dans la figure 1b.

Le tableau ci-après illustre certaines caractéristiques du support.

| Gamanase® immobilisée sur de la Duolite® S-761 | |
|---|---|
| Température (°C) | 30 |
| Hauteur du lit (mm) | 19 |
| Volume du lit (ml) | 2,15 |
| Protéines (mg/g de support) | 37,2 |

### Exemple 2

On immobilise la bêta-mannanase par liaison covalente sur des billes de silice X-030 LS (Sepracor, France) présentant un diamètre de 0,1-0,3 millimètre et des pores d'une taille d'environ 60 nm, de la manière suivante.

Les billes de silice sont préalablement couplées avec du gamma-aminopropyltriethoxysilane, de la manière décrite dans la méthode de silanisation en milieu aqueux de H.H. Weetall (Methods in Enz., **44**, 135-148, 1976). On traite alors 5 gr de billes de silice traitées avec 50 ml d'une solution à 2,5% de glutaraldéhyde dans un tampon 0,1M phosphate de sodium pH7, pendant 1 heure sous vide, suivi de 2 heures à pression atmosphérique. On lave ensuite les particules successivement avec de l'eau distillée, une solution de 0,5M NaCl, et un tampon 0,1M phosphate de sodium pH6. On ajoute ensuite au support activé 25 ml d'une solution composée de 5 ml de Gamanase® et de 20 ml de tampon phosphate de sodium pH6, puis on laisse agir à 4°C, pendant 12 heures sous une atmosphère d'hélium. Finalement, on lave abondamment les billes avec de l'eau distillée, puis avec un tampon 0,1 M phosphate de sodium pH6.

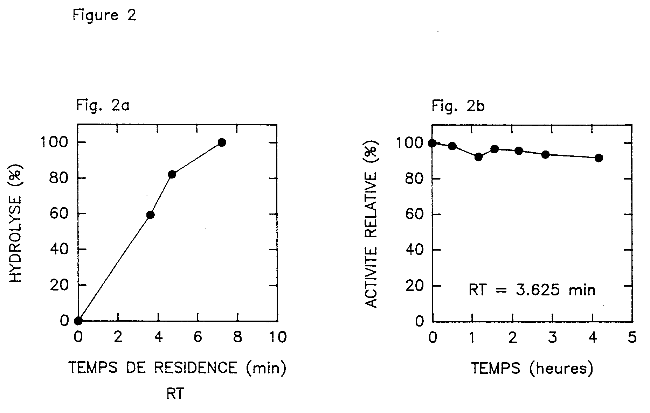

On teste alors cette préparation dans le réacteur à lit fixe de la même manière que dans l'exemple 1. On détermine ainsi le pourcentage d'hydrolyse des galactomannanes en fonction du temps de résidence du substrat dans le réacteur (figure 2a), et on détermine également l'activité relative de l'enzyme en fonction du temps (figure 2b).

Le tableau ci-après illustre certaines caractéristiques du support utilisé.

| Gamanase® immobilisée sur des billes de silice X-030 LS | |
|---|---|
| Température (°C) | 30°C |
| Hauteur du lit (mm) | 20 |
| Volume du lit (ml) | 2,26 |
| Protéines (mg/g de support) | 34,4 |

### Exemple 3

On immobilise la bêta-mannanase par liaison covalente sur des billes de polymère acrylique Eupergit-C® (Röhm, Allemagne) présentant des pores d'une taille d'environ 35 nm et des groupements oxirane réactifs, de la manière suivante.

On ajoute à 5 g d'Eupergit-C®, 37,5 ml d'une solution composée de 7,5 ml de Gamanase® et 30 ml de tampon 0,5 M phosphate de potassium pH7, et on laisse agir sous une agitation faible pendant 48 h à température ambiante. On lave ensuite la préparation avec du tampon 0,5M phosphate de potassium pH7.

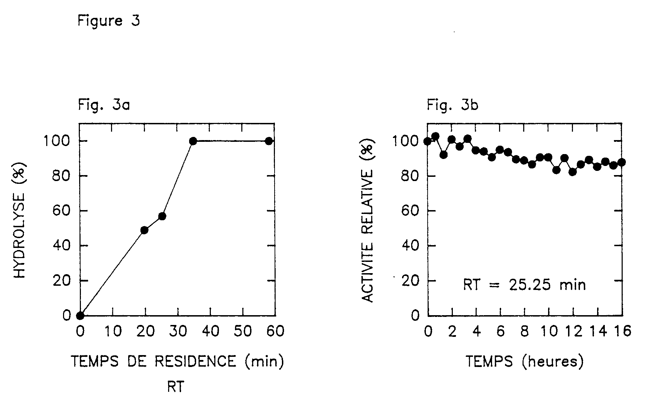

On teste alors cette préparation dans le réacteur à lit fixe de la même manière que celle décrite dans l'exemple 1. On détermine ainsi le pourcentage d'hydrolyse des galactomannanes en fonction du temps de résidence du substrat dans le réacteur (figure 3a), et également l'activité relative de l'enzyme en fonction du temps (figure 3b). On peut noter que la stabilité de l'enzyme est particulièrement bonne sur ce support puisque la bêta-mannanase immobilisée conserve plus de 80% de son activité enzymatique après 16 heures d'hydrolyse en continu.

On peut également remarquer que l'on n'observe pas de relarguage de l'enzyme du support dans l'éluat au cours du temps. En effet, lorsqu'on incube l'éluat pendant plusieurs heures à 30°C et que l'on cherche à mesurer des changements dans la teneur en sucres réducteurs, on n'observe aucune modification.

Le tableau ci-après illustre certaines caractéristiques du support utilisé.

| Gamanase® immobilisée sur de l'Eupergit-C® | |
|---|---|
| Température (°C) | 30 |
| Hauteur du lit (mm) | 24 |
| Volume du lit (ml) | 2,74 |
| Protéines (mg/g de support) | 31,4 |

### Exemple 4

L'immobilisation est réalisée par liaison covalente sur 5 g de particules traditionnelles de verre à pores contrôlés, présentant des pores d'une taille d'environ 70 nm et comprenant en outre des groupements aminopropyl (Sigma G5019), fixés de la même manière que pour les billes de silice de l'exemple 2.

On teste alors cette préparation dans le réacteur à lit fixe décrit dans l'exemple 1, en utilisant un extrait de café soluble traditionnel (Nescafé®, Nestlé) à 2% dans de l'eau distillée.

On modifie les débits de l'extrait de café, et on analyse par HPTLC l'extrait sortant du réacteur. On constate que pour des temps de résidence de 64 et 81 s, les produits de réaction sont composés en très grande partie de mannobiose et de mannotriose. Des traces d'oligomères contenant 4 et 5 mannoses restent visibles. Lorsque le temps de résidence est porté à 105 s, les seuls oligosaccharides présents dans l'extrait sont le mannobiose et le mannotriose, ce qui indique une hydrolyse complète des galactomannanes.

Le tableau ci-après illustre les caractéristiques du support utilisé.

| Gamanase® immobilisée sur du verre à pores contrôlés | |
|---|---|
| Température (°C) | 30°C |
| Hauteur du lit (mm) | 15 |
| Volume du lit (ml) | 1,69 |
| Protéines (mg/g de support) | 32,2 |

### Exemple 5

On utilise l'extrait de café liquide issu de l'étage sous pression résultant de l'extraction séparée de café torréfié moulu décrit dans le brevet EP 0538512, pour alimenter en continu le réacteur à lit fixe décrit dans l'exemple 1, qui est maintenu à 50°C.

Le réacteur contient de la Gamanase® immobilisée sur de l'Eupergit-C® de la manière décrite dans l'exemple 3. Le débit est ajusté de manière à obtenir un temps de résidence de 8 min. Des échantillons sont régulièrement prélevés durant 48 h pour évaluer par chromatographie HPTLC les oligosaccharides produits.

On observe une hydrolyse complète des galactonannanes de l'extrait, car les seuls oligosaccharides de l'extrait traité sont le mannobiose et le mannotriose.

### Exemple 6

On réalise plusieurs hydrolyses de l'extrait de café décrit dans l'exemple 5, dans une colonne verticale traditionnelle comprenant un lit fluidisé de Gamanase® immobilisée sur de l'Eupergit-C®.

Le support comprend 28,6 mg de protéines par g de support, immobilisées d'une manière analogue à celle décrite dans l'exemple 3. Les essais sont réalisés à 65°C.

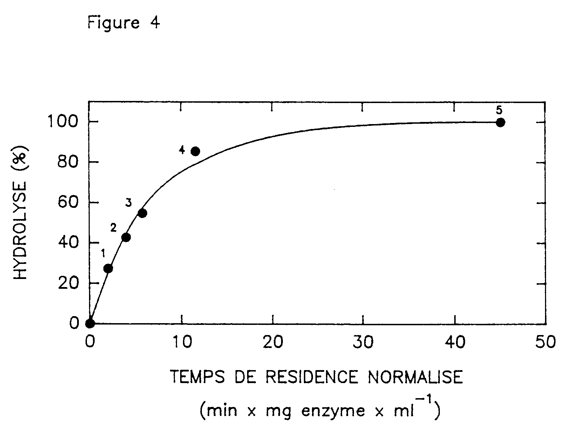

On mesure alors la quantité de mannobiose présent dans l'éluat de chaque essai par la méthode chromatographique décrite précédemment. Puis on détermine le pourcentage d'hydrolyse des galactomannanes en fonction du temps de résidence normalisé de l'extrait dans le réacteur (min x mg de protéines / ml). La figure 4 présente les résultats de ces essais.

Les conditions expérimentales des différents essais ainsi que les résultats obtenus sont indiquées dans le tableau ci-après.

| Essai N° | Quantité d'Eupergit-C® (gr sec) | Débit (ml/h) | Temps de Résidence Normalisé (min.mg/ml) | Hydrolyse (%) |
|---|---|---|---|---|
| 1 | 1,31 | 1148 | 1,96 | 27,3 |
| 2 | 1,31 | 575 | 3,91 | 42,7 |
| 3 | 3,94 | 1180 | 5,73 | 54,7 |
| 4 | 3,94 | 585 | 11,6 | 85,5 |
| 5 | 3,94 | 150 | 45,1 | 100 |

### Exemple 7

On réalise environ 500 hydrolyses successives de l'extrait décrit dans l'exemple 5, dans une cuve de type cuve agitée comprenant en suspension de la Gamanase® immobilisée sur de l'Eupergit-C®.

Les enzymes ont été immobilisées en ajoutant à 5 g d'Eupergit-C®, 37,5 ml d'une solution composée de 7,5 ml de Gamanase® et 30 ml de tampon 1,25M phosphate de potassium pH7. On laisse agir sous une agitation faible pendant 72 h à température ambiante.

Chaque hydrolyse correspond à un cycle de 30 min dans lequel, pendant les deux premières minutes une pompe introduit l'extrait dans la cuve, pendant les 26 minutes suivantes on laisse réagir l'extrait sous agitation, puis dans les deux dernières minutes une pompe aspire par le bas de la cuve l'extrait hydrolysé. Les enzymes immobilisées sont retenues par un filtre (40µm) placé au bas de la cuve, la cuve est thermostatée à 60°C, et un aliquote de chaque éluat est analysé par la méthode chromatographique HPTLC décrite ci-dessus. On mesure alors la densité des taches qui correspondent au mannobiose et au mannotriose.

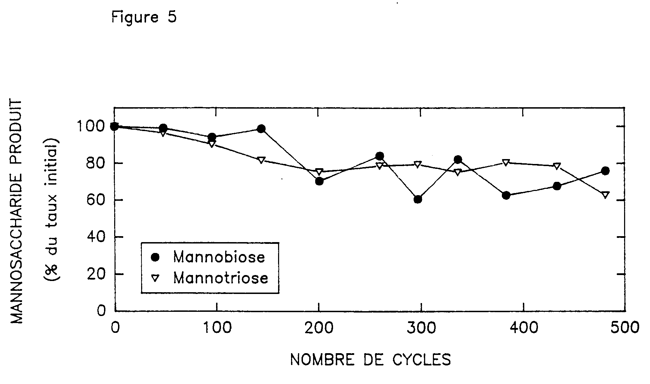

La figure 5 montre les quantités relatives de mannobiose et de mannotriose produites en fonction du nombre de cycle d'hydrolyse. On peut noter que l'enzyme perd particulièrement lentement son activité enzymatique, puisqu'en effet la bêta-mannanase immobilisée conserve plus de 60% de son activité enzymatique après 500 cycles d'hydrolyse successifs d'extrait de café.

Les conditions expérimentales sont indiquées dans le tableau ci-après.

| Gamanase® immobilisée sur de l'Eupergit-C® Hydrolyses successives en cuve agitée | |
|---|---|
| Température (°C) | 60 |
| Volume traité (ml) | 38 |
| Durée d'un cycle (min) | 30 |
| Protéines (mg/g de support) | 47,3 |
| Enzyme immobilisée humide (mg) | 400 |

## Revendications

1. Procédé d'hydrolyse des galactomannanes contenus dans un extrait liquide de café dans lequel on traite ledit extrait à une température de 20-80°C avec des bêta-mannanases immobilisées par liaison covalente sur un support ou par polymérisation des mannanases adsorbées sur un support.

2. Procédé selon la revendication 1, caractérisé en ce que les bêta-mannanases immobilisées conservent:
- plus de 60% de leur activité enzymatique après au moins 500 cycles successifs d'hydrolyse d'extraits de café dans un réacteur de type cuve agitée;
- plus de 80% de leur activité enzymatique après plus de 20 heures d'hydrolyse en continu dans un réacteur comprenant un lit fixe de bêta-mannases immobilisées.

3. Procédé selon la revendication 1, dans lequel on hydrolyse ledit extrait à une température de 30-70°C.

4. Procédé selon la revendication 1, dans lequel l'extrait liquide de café est l'extrait issu de l'étage sous pression résultant d'une extraction séparée de café torréfié moulu.

5. Procédé selon les revendications 1 à 4, dans lequel le support est un support poreux.

6. Procédé selon la revendication 5, dans lequel les pores du support présentent une taille de 20-200 nm.

7. Procédé selon l'une des revendications 1 à 6, dans lequel on hydrolyse l'extrait liquide de café en continu dans un réacteur comprenant un lit fixe de bêta-mannanases immobilisées.

8. Procédé selon l'une des revendications 1 à 6, dans lequel on hydrolyse l'extrait liquide de café en continu dans un réacteur comprenant un lit fluidisé de bêta-mannanases immobilisées.

9. Procédé selon l'une des revendications 1 à 6, dans lequel on hydrolyse l'extrait liquide de café dans une cuve comprenant en suspension des bêta-mannanases immobilisées.

## Claims

1. Method of hydrolysis of the galactomannans contained in a liquid coffee extract, in which the said extract is treated at a temperature of 20-80°C with beta-mannanases immobilised by covalent bonding on a substrate or by polymerisation of the mannanases adsorbed on a substrate.

2. Method according to claim 1, characterised in that the immobilised beta-mannanases retain:
- over 60% of their enzyme activity after at least 500 successive cycles of hydrolysis of coffee extracts in a reactor of the stirred tank type;
- over 80% of their enzyme activity after over 20 hours of continuous hydrolysis in a reactor comprising a fixed bed of immobilised beta-mannanases.

3. Method according to claim 1, in which the said extract is hydrolysed at a temperature of 30-70°C.

4. Method according to claim 1, in which the liquid coffee extract is the extract from the pressurised stage resulting from a split extraction of ground roast coffee.

5. Method according to claims 1 to 4, in which the substrate is a porous substrate.

6. Method according to claim 5, in which the pores of the substrate have a size of 20-200 nm.

7. Method according to one of claims 1 to 6, in which the liquid coffee extract is continuously hydrolysed in a reactor comprising a fixed bed of immobilised beta-mannanases.

8. Method according to one of claims 1 to 6, in which the liquid coffee extract is continuously hydrolysed in a reactor comprising a fluidised bed of immobilised beta-mannanases.

9. Method according to one of claims 1 to 6, in which the liquid coffee extract is hydrolysed in a tank comprising immobilised beta-mannanases in suspension.

## Patentansprüche

1. Verfahren zur Hydrolyse von Galactomannanen, die in einem flüssigen Kaffee-Extrakt enthalten sind, bei dem man den genannten Extrakt bei einer Temperatur von 20-80°C mit beta-Mannanasen, die durch kovalente Bindung an einen Träger oder durch Polymerisation der adsorbierten Mannanasen an einen Träger immobilisiert sind, behandelt,

2. Verfahren nach dem Anspruch 1, dadurch gekennzeichnet, daß die immobilisierten beta-Mannanasen behalten:
- mehr als 60% ihrer enzymatischen Aktvitität nach wenigstens 500 aufeinanderfolgenden Hydrolysezyklen der Kaffee-Extrakte in einem Reaktor vom Rührkessel-Typ;
- mehr als 80% ihrer enzymatischen Aktivität nach mehr als 20 Stunden kontinuierlicher Hydrolyse in einem Reaktor, der ein Festbett aus immobilisierten beta-Mannanasen umfaßt.

3. Verfahren nach dem Anspruch 1, bei dem man den genannten Extrakt bei einer Temperatur von 30-70°C hydrolysiert.

4. Verfahren nach dem Anspruch 1, bei dem der flüssige Kaffee-Extrakt der Extrakt ist, der aus der Druckstufe einer Trenn-Extraktion von gemahlenem Röstkaffee erhalten wurde.

5. Verfahren nach den Ansprüchen 1 bis 4, bei dem der Träger ein poröser Träger ist.

6. Verfahren nach dem Anspruch 5, bei dem die Trägerporen eine Größe von 20-200 nm aufweisen.

7. Verfahren nach einem der Ansprüche 1 bis 6, bei dem man den flüssigen Kaffee-Extrakt kontinuierlich in einem Reaktor hydrolysiert, der ein Festbett aus immobilisierten beta-Mannanasen enthält.

8. Verfahren nach einem der Ansprüche 1 bis 6, bei dem man den flüssigen Kaffee-Extrakt kontinuierlich in einem Reaktor hydrolysiert, der eine Wirbelschicht aus immobilisierten beta-Mannanasen enthält.

9. Verfahren nach einem der Ansprüche 1 bis 6, bei dem man den flüssigen Kaffee-Extrakt in einem Kessel hydrolysiert, der suspendierte, immobilisierte beta-Mannanasen enthält.
